# EUROPÄISCHE PATENTANMELDUNG

(11) **EP 1 813 748 A2**
(43) Veröffentlichungstag der Anmeldung: **01.08.2007**
(21) Anmeldenummer: 06025168.3
(22) Anmeldetag: 06.12.2006
(51) Int. Cl.: E05C 1/02, B60P 3/32, F15B 15/14

(54) **Geschlossener Sicherheits-Ladeaufbau für einen Lastkraftwagen**

(30) Priorität: 25.01.2006 DE 102006003438
(71) Anmelder: Gammisch, Robert, 95339 Neuenmarkt (DE); Seifert, Klaus, 95502 Himmelkron (DE)
(72) Erfinder: Seifert, Klaus, 95502 Himmelkron (DE); Gammisch, Robert, 95339 Neuenmarkt (DE); Pietsch, Marco, 95339 Neuenmarkt (DE)
(74) Vertreter: Hofmann, Matthias

(57) **Zusammenfassung**

Ein geschlossener Sicherheits-Ladeaufbau für einen Lastkraftwagen hat ein heckseitiges Rolltor (2) zum Verschließen des Ladeaufbaus. Das Rolltor (2) ist bei der Verlagerung zwischen einer Schließ- und einer Offenstellung in seitlichen Führungsaufnahmen (11) eines Aufbaurahmens zumindest abschnittsweise seitlich geführt. Mindestens ein Verriegelungszylinder (19) ist im Ladeaufbau benachbart an einer der Führungsaufnahmen (11) aufbaurahmenfest angebracht. Der Verriegelungszylinder (19) hat einen Verriegelungsbolzen (20), der angetrieben zwischen einer Verriegelungsstellung und einer Freigabestellung verlagerbar ist. Der Verriegelungsbolzen (20) ist derart angeordnet, dass er in der Verriegelungsstellung bei gleichzeitiger Schließstellung des Rolltors (2) mit einem Verriegelungsanschlag (22) des Rolltors (2) zur Verhinderung einer Rolltor-Verlagerung in die Offenstellung zusammenwirkt und in der Freigabestellung vom Verriegelungsanschlag (22) freikommt und hierdurch eine Rolltor-Verlagerung freigibt. Es resultiert ein Ladeaufbau, bei dem bei vorgegebenem, geringem Gewicht eine hohe Sicherheitsstufe erreicht ist.

## Beschreibung

Die Erfindung betrifft einen geschlossenen Sicherheits-Ladeaufbau für einen Lastkraftwagen nach dem Oberbegriff des Anspruchs 1.

Bekannte derartige Ladeaufbauten stellen einen Kompromiss aus Aufbaugewicht und Verschlusssicherheit dar. Sichere Ladeaufbauten, bei denen ein unerwünschtes Eindringen in der Regel verhindert ist, sind oftmals sehr schwer. Leichte Ladeaufbauten wiederum bieten für viele Anwendungsfälle, insbesondere für Sicherheitstransporte, keinen ausreichenden Schutz gegen unerwünschtes Eindringen.

Es ist daher eine Aufgabe der vorliegenden Erfindung, einen Ladeaufbau der eingangs genannten Art derart weiterzubilden, dass bei vorgegebenem, geringem Gewicht eine möglichst hohe Sicherheitsstufe erreicht ist.

Diese Aufgabe ist erfindungsgemäß gelöst durch einen Ladeaufbau mit den im Kennzeichnungsteil des Anspruchs 1 angegebenen Merkmalen.

Die erfindungsgemäß angeordneten Verriegelungsbolzen sorgen für eine sichere Verriegelung des Rolltors in der Schließstellung. Da die Verriegelungszylinder im Inneren des Ladeaufbaus angeordnet sind, kann einfach verhindert werden, dass die Verriegelungszylinder von außen zugänglich sind. Je nach Anzahl der beim Ladeaufbau eingesetzten Verriegelungszylinder kann auf Wunsch die Sicherheitsstufe des Ladeaufbaus angepasst werden. Gewichtsmäßig spielen die Verriegelungszylinder im Vergleich zum Gesamtgewicht des Ladeaufbaus praktisch keine Rolle. Es resultiert ein insgesamt recht leichter, trotzdem aber sicherer Ladeaufbau.

Eine Abdeckung des mindestens einen Verriegelungszylinders nach Anspruch 2 schützt diesen zusätzlich vor einer unerwünschten Demontage.

Verriegelungszylinder-Anzahlen und -Anordnungen nach den Ansprüchen 3 und 4 ermöglichen an die jeweiligen Sicherheitserfordernisse angepasste Ladeaufbauten.

Ein Pneumatikantrieb nach Anspruch 5 ist einfach realisierbar, da der mindestens eine Verriegelungszylinder an die bei den meisten Ladeaufbauten schon vorhandene Pneumatikversorgung angeschlossen werden kann.

Entsprechendes gilt für einen Rolltor-Antrieb nach Anspruch 6.

Ein Schließventil nach Anspruch 7, mit dem der Rolltor-Antrieb sowie alternativ oder zusätzlich der mindestens eine Verriegelungszylinder ausgerüstet werden kann, sorgt dafür, dass dann, wenn eine externe Betätigung des Rolltor-Antriebs bzw. des mindestens einen Verriegelungszylinders wegfällt, automatisch ein Übergang in eine Verriegelungsstellung erfolgt, sodass das Rolltor nicht unerwünscht z. B. nach Abkoppeln einer externen Versorgung geöffnet werden kann.

Ausführungen eines Bedienterminals nach den Ansprüchen 8 und 9 führen zu einer sicheren Verhinderung unautorisierter Betätigungen des Rolltor-Antriebs.

Ein Sattelauflieger nach Anspruch 10 ist eine flexibel einsetzbare Ausgestaltung eines Ladeaufbaus.

Ein Ausführungsbeispiel der Erfindung wird nachfolgend anhand der Zeichnung näher erläutert. In dieser zeigen:
- Fig. 1: eine Seitenansicht eines geschlossenen Lastkraftwagen-Ladeaufbaus in Form eines Sattelaufliegers;

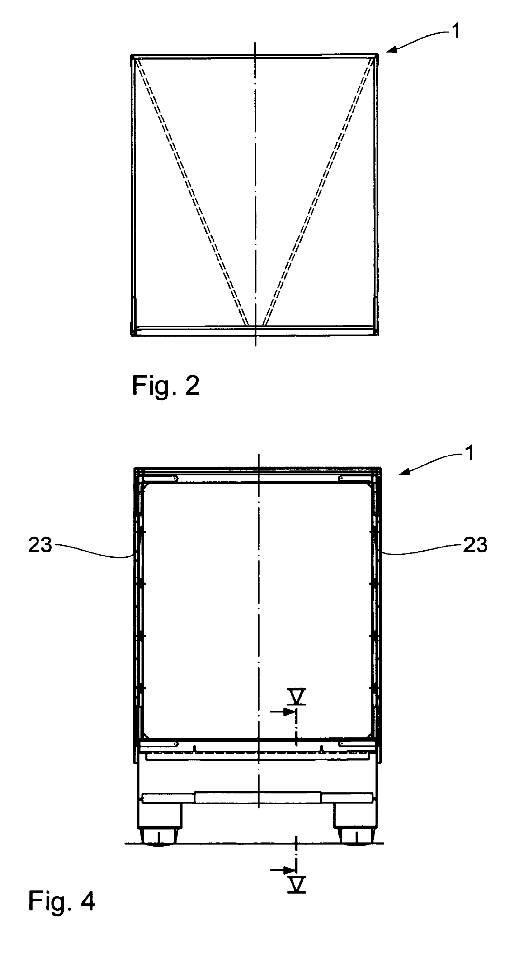

- Fig. 2: eine Stirnansicht des Sattelaufliegers von der Front her gesehen;

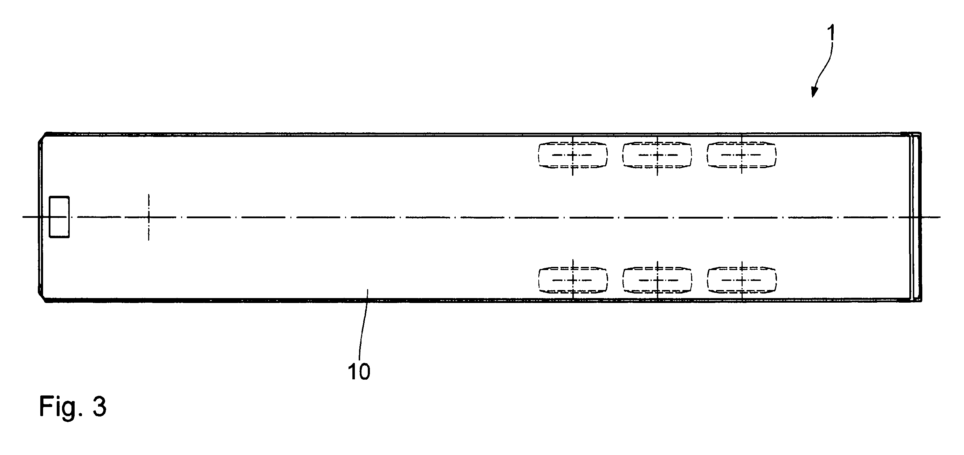

- Fig. 3: eine Aufsicht auf den Sattelauflieger;
- Fig. 4: eine Stirnansicht des Sattelaufliegers vom Heck her gesehen;
- Fig. 5: vergrößert und im Ausschnitt einen Schnitt gemäß Linie V-V in Fig. 4; und
- Fig. 6: vergrößert und im Ausschnitt einen Schnitt gemäß Linie VI-VI in Fig. 1.

Ein insgesamt mit 1 bezeichneter Sattelauflieger stellt ein in der Zeichnung dargestelltes Ausführungsbeispiel für einen geschlossenen Lastkraftwagen-Ladeaufbau dar. Bis auf die nachfolgend im Detail beschriebenen Einzelheiten weist der Sattelauflieger 1 einen Aufbau auf, der vom Stand der Technik her bekannt ist.

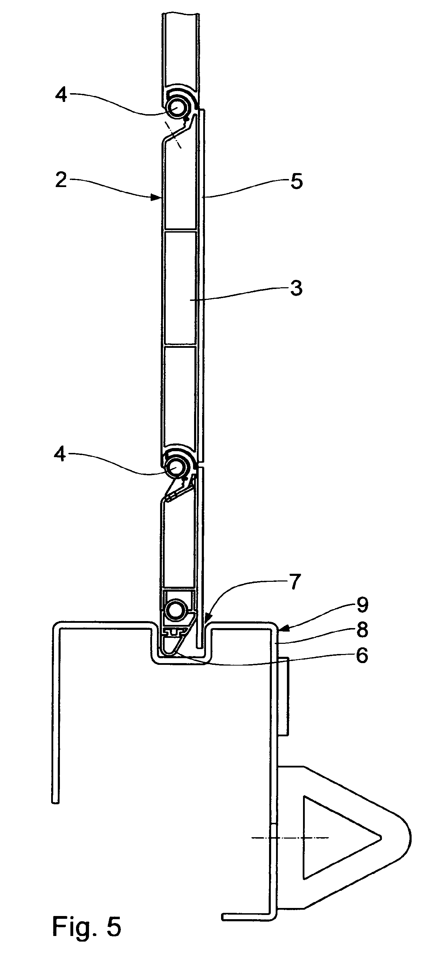

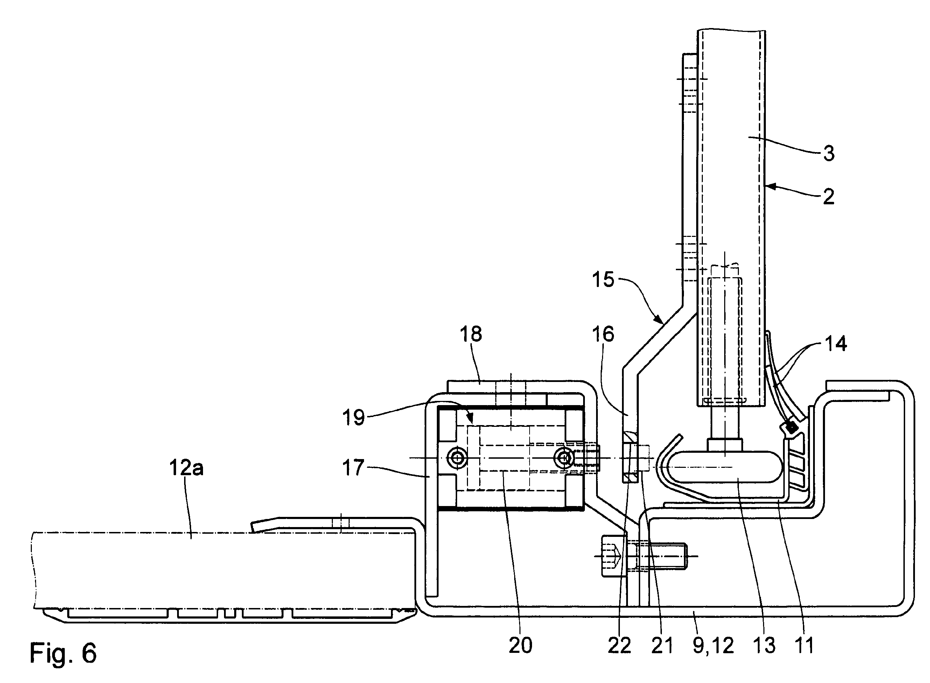

Zum Verschließen des Sattelaufliegers 1 dient ein heckseitiges Rolltor 2, welches ausschnittsvergrößert in den Schnittdarstellungen der Fig. 5 und 6 dargestellt ist. Wie dies an sich aus dem Stand der Technik bekannt ist, weist das Rolltor 2 eine Mehrzahl von Gelenkgliedern 3 auf, die gegeneinander um Gelenke 4 mit horizontalen Gelenkachsen verschwenkbar sind.

Jedes Rolltor-Gelenkglied 3 ist nach außen hin durch jeweils eine Edelstahlplatte 5 armiert. Ein in Schließrichtung führendes Rolltorende 6 taucht in der in Fig. 5 dargestellten Schließstellung des Rolltors 2 in eine querverlaufende Mulde 7 eines Querträgers 8 einer Heckportalrunge 9 eines Rahmens 10 des Sattelaufliegers 1 ein. Hierdurch wird ein Aufstemmen des Rolltors 2, z. B. mit Hilfe eines Stemmeisens, wirkungsvoll verhindert, da das Stemmeisen nicht unter die das Rolltor 2 unten abschließende Stirnseite geschoben werden kann.

Das Rolltor 2 ist zwischen der Schließstellung und einer nicht in der Zeichnung dargestellten Offenstellung verlagerbar. Bei dieser Verlagerung ist das Rolltor 2 in seitlichen Führungsaufnahmen 11 seitlicher Vertikalträger 12 der Heckportalrunge 9 seitlich geführt. An diesen seitlichen Vertikalträger 12 schließt sich, wie in der Fig. 6 dargestellt, eine Seitenwand 12a des Sattelaufliegers 1 an. In den Führungsaufnahmen 11 laufen Führungsrollen 13 mit horizontaler Drehachse, die drehbar jeweils an einem der Gelenkglieder 3 des Rolltors 2 montiert sind. An den Führungsaufnahmen 11 sind seitliche Abdecklappen 14 montiert, deren freie Enden an seitlichen Abschnitten der Edelstahlplatten 5 der Gelenkglieder 3 des Rolltors 2 außen aufliegen. Es sind zwei hintereinanderliegende Abdecklappen 14 vorgesehen. Die Abdecklappen 14 verhindern einen direkten Zugriff von außen auf die Führungsrollen 13.

Ausgewählte Gelenkglieder 3 tragen auf ihrer Innenseite, also an der von der Edelstahlplatte 5 abgewandten Seite, einen Aufnahmeträger 15, der starr an dem ihm zugeordneten Gelenkglied 3 montiert ist. Ein freies Ende 16 des Aufnahmeträgers 15 erstreckt sich seitlich über die Gelenkglieder 3 hinaus bis etwa auf Höhe der jeweiligen Führungsrolle 13. Auf der von der jeweiligen Führungsrolle 13 abgewandten Seite des freien Endes 16 ist über zwei Edelstahlprofile 17, 18 ein dem in Fig. 6 dargestellten Aufnahmeträger 15 zugeordneter Verriegelungszylinder 19 am Vertikalträger 12 der Heckportalrunge 9 festgelegt. Der Verriegelungszylinder 19 ist an der dem Inneren des Sattelaufliegers 1 zugewandten Seite des Vertikalträgers 12 angeordnet. Die beiden Edelstahlprofile 17, 18 umgreifen den Verriegelungszylinder 19 und dienen somit als Schutz für diesen und zusätzlich als Schutz des Rolltors 2 gegen ein Aufstoßen von außen. Insgesamt ist der Verriegelungszylinder 19 der Führungsaufnahme 11 benachbart angeordnet. Beim Verriegelungszylinder 19 handelt es sich um einen doppeltwirkenden Pneumatikzylinder.

Ein Verriegelungsbolzen 20 des Verriegelungszylinders 19 ist in Fig. 6 durchgezogen in einer Freigabestellung dargestellt. Angedeutet ist zudem in Fig. 6 eine Verriegelungsstellung eines Endstücks 21 des Verriegelungsbolzens 20. In der Verriegelungsstellung greift das Endstück 21 des Verriegelungsbolzens 20, soweit gleichzeitig die Schließstellung des Rolltors 2 vorliegt, in eine Verriegelungsaufnahme 22 des freien Endes 16 des Aufnahmeträgers 15 ein. Die Verriegelungsaufnahme 22 dient insoweit als Verriegelungsanschlag, mit dem der Verriegelungsbolzen 20 in der Verriegelungsstellung zur Verhinderung einer Rolltor-Verlagerung in die Offenstellung zusammenwirkt. In der Freigabestellung kommt der Verriegelungsbolzen 20 von der Verriegelungsaufnahme 22 frei, sodass hierdurch eine Rolltor-Verlagerung freigegeben ist.

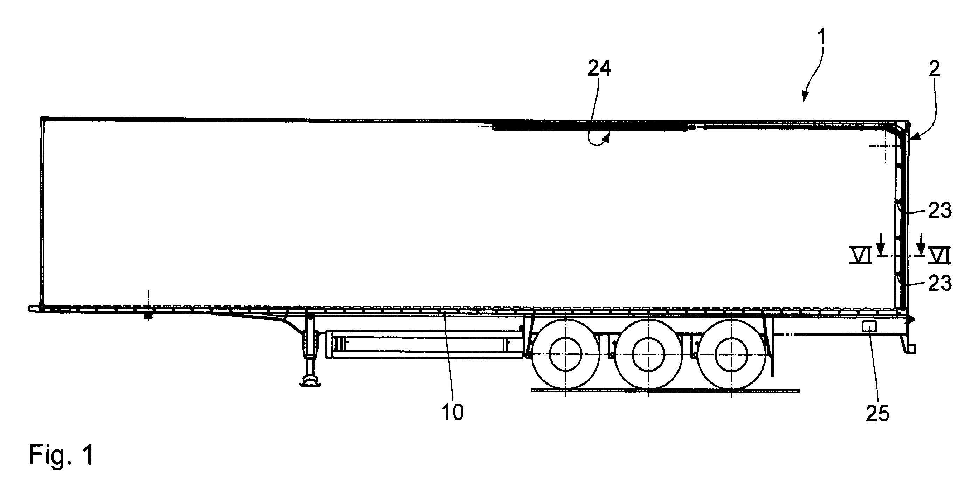

Zusätzlich zu dem in Fig. 6 dargestellten Verriegelungszylinder 19 liegen beim dargestellten Ausführungsbeispiel sieben weitere Montagevorbereitungen 23 für Verriegelungszylinder 19 vor, deren Position in den Fig. 1 und 4 angedeutet ist. Es können auf jeder Seite des Rolltors 2 vier äquidistant zueinander angeordnete Verriegelungszylinder 19 montiert werden.

Jedem der montierten Verriegelungszylinder 19 wird ein Aufnahmeträger 15 zugeordnet.

Um einen ausreichenden Schutz des Rolltors 2 vor unerwünschtem Öffnen zu bieten, sind mindestens zwei Verriegelungszylinder 19 vorgesehen, wobei auf jeder Seite des Rolltors 2 einer dieser beiden Verriegelungszylinder 19 angeordnet ist. Bei Anordnungsvarianten können auf jeder Seite auch zwei oder drei Verriegelungszylinder 19 vorgesehen sein. Prinzipiell können pro Seite auch mehr als vier Verriegelungszylinder 19 vorgesehen sein, wobei dann eine entsprechend höhere Anzahl an Montagevorbereitungen 23 vorgesehen sein muss.

Zur Verlagerung des Rolltors 2 dient ein Rolltorantrieb 24 in Form eines doppeltwirkenden pneumatischen Antriebszylinders. Letzterer hat ein Schließventil, welches den Antriebszylinder bei Abfall des Pneumatikdrucks in einer Verriegelungsstellung hält, in der eine Verlagerung des Rolltors 2 schon aufgrund einer Sperrwirkung des Rolltorantriebs 24 verhindert ist. Derartige Schließventile sind dem Fachmann bekannt. Entsprechende Schließventile, die die Verriegelungsbolzen 20 bei Druckabfall in der Verriegelungsstellung halten, können auch bei den Verriegelungszylindern 19 vorgesehen sein.

Zur Betätigung des Rolltorantriebs 24 gehört ein in Fig. 1 schematisch angedeutetes Bedienterminal 25. Durch Eingabe eines Zahlencodes in das Bedienterminal 25 kann ein Benutzer die Verriegelung durch die Verriegelungszylinder 19 aufheben und das Rolltor 2 öffnen. Bevor der Benutzer den Zahlencode eingeben kann, muss er eine Betätigungssperre des Bedienterminals 25 überwinden. Dies geschieht, indem der Benutzer einen codierten Schlüssel verwendet, welcher ein entsprechendes Schloss des Bedienterminals 25 öffnet. Bei wiederholt fehlerhafter Bedienung des Bedienterminals 25 oder bei nicht autorisiertem Schlüssel trennt eine nicht dargestellte zentrale Steuerung sofort die Verriegelungszylinder 19 und den Rolltorantrieb 24 von einer zentralen Pneumatikversorgung. Die Verriegelungszylinder 19 und der Rolltorantrieb 24 werden dann automatisch in der jeweiligen Verriegelungsstellung festgelegt, sodass ein Öffnen des Rolltors 2 nicht möglich ist. Auch anderweitige Manipulationen am Bedienterminal 25 werden von der zentralen Steuerung, z. B. durch elektrische Überwachung von Signalleitungen, erkannt und bewirken ein Abkoppeln der zentralen Pneumatikversorgung.

## Patentansprüche

1. Geschlossener Sicherheits-Ladeaufbau (1) für einen Lastkraftwagen
- mit einem heckseitigen Rolltor (2) zum Verschließen des Ladeaufbaus (1),
- welches bei der Verlagerung zwischen einer Schließ- und einer Offenstellung in seitlichen Führungsaufnahmen (11) eines Aufbaurahmens (10) zumindest abschnittsweise seitlich geführt ist,
**gekennzeichnet durch** mindestens einen im Ladeaufbau (1) benachbart an einer der Führungsaufnahmen (11) aufbaurahmenfest angebrachten Verriegelungszylinder (19) mit einem angetrieben zwischen einer Verriegelungsstellung und einer Freigabestellung verlagerbaren Verriegelungsbolzen (20), welcher derart angeordnet ist, dass er
- in der Verriegelungsstellung bei gleichzeitiger Schließstellung des Rolltors (2) mit einem Verriegelungsanschlag (22) des Rolltors (2) zur Verhinderung einer Rolltor-Verlagerung in die Offenstellung zusammenwirkt,
- in der Freigabestellung vom Verriegelungsanschlag (22) freikommt und hierdurch eine Rolltor-Verlagerung freigibt.

2. Ladeaufbau nach Anspruch 1, **gekennzeichnet durch** mindestens ein Edelstahlprofil (17, 18), welches den mindestens einen Verriegelungszylinder (19) zum Innern des Ladeaufbaus (1) hin abdeckt.

3. Ladeaufbau nach Anspruch 1 oder 2, **gekennzeichnet durch** eine Mehrzahl der Verriegelungszylinder (19).

4. Ladeaufbau nach Anspruch 3, **dadurch gekennzeichnet, dass** an jeder der seitlichen Führungsaufnahmen (11) mindestens zwei Verriegelungszylinder (19), bevorzugt mindestens drei Verriegelungszylinder (19), angeordnet sind.

5. Ladeaufbau nach einem der Ansprüche 1 bis 4, **dadurch gekennzeichnet, dass** der mindestens eine Verriegelungsbolzen (20) pneumatisch angetrieben ist.

6. Ladeaufbau nach einem der Ansprüche 1 bis 5, **gekennzeichnet durch** einen Rolltor-Antrieb (24) zur Verlagerung des Rolltors (2), insbesondere **durch** einen pneumatischen Antriebszylinder.

7. Ladeaufbau nach einem der Ansprüche 1 bis 6, **dadurch gekennzeichnet, dass** der Antriebszylinder und/oder der Verriegelungszylinder ein Schließventil aufweist, welches den Antriebszylinder und/oder den Verriegelungsbolzen (20) des mindestens einen Verriegelungszylinders (19) bei Ausfall einer äußeren Betätigung des Zylinders, insbesondere bei Druckabfall, in einer Verriegelungsstellung hält, in der eine Verlagerung des Rolltors (2) verhindert ist.

8. Ladeaufbau nach einem der Ansprüche 1 bis 7, **gekennzeichnet durch** ein Bedienterminal (25) zur Eingabe eines Codes zur Betätigung des Rolltor-Antriebs (24) und des mindestens einen Verriegelungszylinders (19).

9. Ladeaufbau nach Anspruch 8, **dadurch gekennzeichnet, dass** das Bedienterminal (25) eine Betätigungssperre in Form eines Schlosses aufweist, welches mit einem codierten Schlüssel zusammenwirkt.

10. Ladeaufbau nach einem der Ansprüche 1 bis 9, **gekennzeichnet durch** eine Ausführung als Sattelauflieger.
